# EUROPÄISCHE PATENTANMELDUNG

(11) **EP 4 715 016 A1**
(43) Veröffentlichungstag der Anmeldung: **25.03.2026**
(21) Anmeldenummer: 24201737.4
(22) Anmeldetag: 20.09.2024
(51) Int. Cl.: C09D 4/00, C09D 5/00, C09J 5/06, C09J 5/02, C09J 4/00, C08F 122/10, C08F 2/50

(54) **HÄRTBARE (METH)ACRYLAT ZUSAMMENSETZUNG UND ABLÖSBARER KLEBEVERBUND**

(71) Anmelder: Sika Technology AG, 6340 Baar (CH)
(72) Erfinder: BERNT, Stephan, 8048 Zürich (CH); BORDEANU, Nicolae, 8048 Zürich (CH)
(74) Vertreter: Sika Patent Attorneys

(57) **Zusammenfassung**

Die vorliegende Erfindung betrifft härtbare Zusammensetzungen enthaltend
- mindestens eine Verbindung mit (Meth)acrylat Endgruppen **V;**
- mindestens ein Photoinitiator **P;**
- mindestens ein thermisch expandierbares Material **E;**
- optional Additive **AD;**

und ihre Anwendung im Klebeverbund, umfassend
(a) ein Substrat **S**;
(b) eine ausgehärtete härtbare Zusammensetzung, welche auf dem Substrat **S** aus (a) aufgebracht ist;
(c) eine ausgehärtete Klebstoff-Zusammensetzung, welche auf der ausgehärteten härtbaren Zusammensetzung aus (b) aufgebracht ist

insbesondere für Verklebungen im Automobilbereich. Ebenso betrifft die vorliegende Erfindung ein Verfahren zum Ablösen des Klebeverbunds umfassend die folgenden Schritte:
i) Erwärmen des Klebeverbunds auf mindestens die Ausdehnungstemperatur des thermisch expandierbaren Materials **E** während mindestens 5 Sekunden, bevorzugt während mindestens 30 Sekunden, besonders bevorzugt während 1 Minute, wobei eine Ausdehnungstemperatur von mindestens 80°C, bevorzugt mindestens 100°C, besonders bevorzugt mindestens 120°C erreicht wird;
ii) Trennen der ausgehärteten Zusammensetzung vom Substrat **S,** direkt nach dem Schritt i) oder nach Abkühlen des Klebeverbunds auf Raumtemperatur, bevorzugt direkt nach dem Schritt i).

Die härtbare Zusammensetzung lässt sich schnell und einfach auftragen und aushärten und der Klebeverbund besitzt in der Anwendung eine hohe Zugscherfestigkeit und besitzt nach einem Debonding Stimulus eine tiefe Debondingfestigkeit, lässt sich also schnell und einfach ablösen.

## Beschreibung

### Technisches Gebiet

Die Erfindung betrifft härtbare (Meth)acrylat-Zusammensetzungen und ihre Anwendung im Klebeverbund, insbesondere für Verklebungen im Automobilbereich, und Verfahren zum Ablösen des Klebeverbunds.

### Stand der Technik

Härtbare Zusammensetzungen auf Basis von (Meth)acrylat-Verbindungen werden oft als Klebstoffe oder Klebstoffbeschichtungen verwendet, da sie eine gute mechanische und optische Stabilität aufweisen und insbesondere eine sehr gute Haftung auf vielen Substraten ermöglichen. Dadurch sind diese auch für Anwendungen als Haftvermittler (Primer) geeignet.

Gesellschaft und Industrie verlangen vermehrt nach nachhaltigen Lösungen, die eine Kreislaufwirtschaft und ein Recycling der verwendeten Materialien ermöglichen. Klebstoffe können dazu einen wichtigen Beitrag liefern, da diese in vielen Anwendungen vorkommen und insbesondere in Verbundstoffen verschiedene Materialen miteinander verbinden. Für ein wirtschaftlich sinnvolles Recycling der verklebten Produkte nach ihrem Gebrauch oder für Reparaturzwecke müssen diese Verklebungen jedoch wieder gelöst werden können. Ein möglicher Ansatz ist das sogenannte «debonding on demand», bei dem ein Klebeverbund mit einem wohldefinierten Stimulus von einem Substrat abgelöst werden kann. Der Trennungsprozess sollte die getrennten Materialen dabei in ausreichend hoher Qualität separieren. Daher sind harsche mechanische, chemische oder thermische Verfahren, die die einzelnen Materialien übermässig strapazieren, ungeeignet. Bisherige Klebesysteme stossen ebenfalls in vielen Anwendungsbereichen an ihre Grenzen, da eine Demontage der Verbindung oft mit hohem Aufwand oder einer Beschädigung der verklebten Teile verbunden ist. Eine spezifische Reparatur eines Teiles ist dabei oft nicht möglich. Insbesondere bei Teilen im Automobil- und Batteriebereich, wo teure und seltene Rohstoffe verwendet werden, ist eine mögliche Reparatur und Wiederverwendung nicht nur aus ökologischen, sondern auch aus ökonomischen Gründen, wünschenswert. Daher muss ein Klebstoff verwendet werden, der während dem Gebrauch den notwendigen Anforderungen genügt, sich aber nach dem Ende der Lebenszeit des Produkts und dem Anwenden eines Stimulus einfach ablösen lässt.

Eine mögliche Strategie bei «debonding on demand» Anwendungen ist das Verwenden eines Haftvermittlers mit thermo-reversiblen Substanzen (bspw. Produkte der Diels-Alder-Reaktion). Ebenso besteht der derzeitige Stand der Technik für «debonding on demand» Haftvermittler aus druckempfindlichen Klebstoffen (PSA) auf Basis von Epoxy-, Polyurethan- oder (Meth)acrylat-Zusammensetzungen.

Die Publikation JP2023088827A beschreibt ein PSA-Klebeband, wobei das Klebeband leicht und in kurzer Zeit von der Klebestelle entfernt werden kann, ohne die Klebestelle durch übermässige Hitze zu beschädigen.

### Die Patentschrift WO2023037914A1 beschreibt eine

Klebstoffzusammensetzung basierend auf ungesättigten Polyurethanen, die sich für eine thermisch abziehbare Klebefolie eignen.

Eine bisher ungelöste Problematik beim Verwenden einer ablösbaren Primer-Schicht in «debonding on demand» Applikationen stellt die benötigte Zeit und der zusätzliche Aufwand dar, der besteht, wenn man diese Primer-Schicht im Klebeverbund einbauen muss. Insbesondere beim Verwenden von Epoxidbasierten Primern besteht eine lange Wartezeit aufgrund der langsamen Aushärtung.

Daher besteht Bedarf an einer härtbaren Zusammensetzung, die sich schnell und in einem einfachen Prozess auftragen und aushärten lässt, die den mechanischen Bedürfnissen in einem Klebeverbund genügt und sich im Sinne einer «debonding on demand» Funktionsschicht wieder entfernen lässt.

### Darstellung der Erfindung

Aufgabe der vorliegenden Erfindung ist es daher, eine härtbare Zusammensetzung zur Verfügung zu stellen, die sich als Funktionsschicht in einer «debonding on demand» Anwendung eignet, schnell auftragen und aushärten lässt und unter einem thermischen Stimulus entfernen lasst. Ebenso ist es Teil der Aufgabe der vorliegenden Erfindung einen Klebeverbund und einen Prozess zum Ablösen dieses Klebeverbunds zur Verfügung zu stellen

Besonders überraschend ist der Umstand, dass der erfindungsgemässe Klebeverbund in bevorzugten Ausführungsformen eine hohe Zugscherfestigkeit im Einsatz besitzt (> 4 MPa), aber nach einem Debonding Stimulus auch eine tiefe Debondingfestigkeit besitzt (< 0.5 MPa).

Die härtbare Zusammensetzung kann als Funktionsschicht mit vielen verschiedenen Substraten und Klebstoffzusammensetzungen genutzt werden und daher in vielen verschiedenen Bereichen eingesetzt werden.

Einen weiteren Vorteil bietet die UV-Vis Härtung der erfindungsgemässen Zusammensetzung: Das Auftragen und die Härtung der härtbaren Zusammensetzung kann innerhalb von 30 Sekunden erfolgen, was einen enormen Prozessvorteil gegenüber den derzeitig im Stand der Technik verwendeten Zusammensetzungen bietet.

Damit ist die erfindungsgemässe härtbare Zusammensetzung besonders geeignet als Funktionsschicht in «debonding on demand» Anwendungen, insbesondere in der Automobilindustrie, im Fahrzeugbau oder auch im Verkleben von Batterien von Elektrofahrzeugen.

Diese Aufgabe wird mit einer härtbaren Zusammensetzung wie in Anspruch 1 beschreiben gelöst.

Weitere Aspekte der Erfindung sind Gegenstand weiterer unabhängiger Ansprüche. So ist auch ein Klebeverbund und ein Prozess zum Ablösen dieses Klebeverbunds Gegenstand dieser Erfindung. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung enthaltend
- mindestens eine Verbindung mit (Meth)acrylat Endgruppen **V;**
- mindestens ein Photoinitiator **P**;
- mindestens ein thermisch expandierbares Material **E;**
- optional Additive **AD**.

Der Begriff "(Meth)acrylat" ist zu verstehen als "Methacrylat" oder "Acrylat".

Stoffnamen, die mit "Poly" beginnen, wie z. B. Polyol oder Poly(meth)acrylat, beziehen sich hier auf Stoffe, die formal pro Molekül zwei oder mehr der in ihrem Namen genannten funktionellen Gruppen enthalten.

Unter "Molekulargewicht" ist in diesem Dokument die definierte und diskrete molare Masse (in Gramm pro Mol) eines Moleküls oder eines Teils eines Moleküls zu verstehen.

Das "durchschnittliche Molekulargewicht" bezeichnet das Zahlenmittel Mn eines oligomeren oder polymeren Gemischs, insbesondere eines polydispersen Gemischs, von Molekülen oder Radikalen, das in der Regel durch Gelpermeationschromatographie (GPC) gegen einen Polystyrolstandard bestimmt wird.

Eine gestrichelte Linie in den Formeln dieses Dokuments stellt jeweils die Bindung zwischen einem Substituenten und dem zugehörigen Molekülrest dar, sofern nicht anders angegeben.

Sofern nicht anders angegeben, beziehen sich alle im Dokument erwähnten Industriestandards oder sonstigen Normen auf die Version des Industriestandards oder der sonstigen Norm, die zum Zeitpunkt der Einreichung der Patentanmeldung gültig war.

Die Begriffe "Masse" und "Gewicht" werden in diesem Dokument gleichbedeutend verwendet. So ist ein "Gewichtsprozentsatz" (Gew.-%) ein prozentualer Anteil an der Masse, der sich, sofern nicht anders angegeben, auf die Masse (das Gewicht) der Gesamtzusammensetzung oder, je nach Kontext, auf das gesamte Molekül bezieht.

Als "aliphatisch" wird eine Isocyanatgruppe bezeichnet, welche direkt an ein aliphatisches oder cycloaliphatisches C-Atom gebunden ist. Isocyanate mit ausschliesslich aliphatischen Isocyanatgruppen werden entsprechend als "aliphatische Isocyanate" bezeichnet.

Als "monomeres aliphatisches Diisocyanat" wird ein monomeres Diisocyanat mit aliphatischen Isocyanatgruppen bezeichnet.

Als "Polyetherurethan-Polymer" wird ein Polymer bezeichnet, welches als Repetiereinheiten Ethergruppen aufweist und zusätzlich Urethangruppen enthält.

Als "Urethanacrylat-Polymer" wird ein Polymer bezeichnet, welches als Reptiereinheiten Urethangruppen aufweist und zusätzlich Acrylatgruppen enthält.

Unter einer radikalischen Kettenreaktion oder Kettenpolymerisation versteht man den Mechanismus der Polymerisation von (Meth)acrylat-haltigen Verbindungen. Dabei wird ein Initiator eingesetzt, um freie Radikale zu erzeugen, die die Polymerisation starten. Diese Radikale addieren sich an die Doppelbindung der (Meth)acrylat-Monomere, wodurch ein (Meth)acrylat-Radikal entsteht. Durch wiederholte Addition weiterer (Meth)acrylat-Monomere an den so entstandenen Radikalen wächst die Polymerkette bis die Kette durch eine Abbruchreaktion beendet wird
UV-Vis-Licht oder UV-Vis-Strahlung bezeichnet im vorliegenden Dokument Strahlung im Bereich des ultravioletten Spektrums (UV) und des sichtbaren Spektrums (Vis), insbesondere den Wellenlängenbereich zwischen 150 nm und 750 nm. Bevorzugte Wellenlängen für die Aktivierung der entsprechenden bevorzugten als Radikal-Initiator eingesetzten Photoinitiatoren liegen im Bereich zwischen 300 nm um 600 nm, insbesondere zwischen 350 nm und 500 nm. Solche Wellenlängen ermöglichen in Kombination mit geeigneten Photoinitiatoren eine genügend rasche Aushärtung, wobei aber die Belastung durch möglicherweise schädigende, höherenergetische Strahlung gleichzeitig minimiert wird.

Ein Photoinitiator ist ein Initiator, welcher durch Licht im ultravioletten (UV) oder sichtbaren Spektrum (Vis) aktiviert wird und die Bildung von Radikalen ermöglicht. Es erfolgt demnach eine Aushärtung der erfindungsgemässen Zusammensetzung durch die kurzzeitige Bestrahlung mit UV-Vis-Licht geeigneter Wellenlänge. Der Vorteil der Nutzung eines UV-Vis-aktivierbaren Photoinitiators ist die schnelle Aushärtung nach sehr kurzer Bestrahlung, meist im Sekundenbereich, ohne die Notwendigkeit einer Wärmezufuhr. UV-Strahlenquellen sind kostengünstig und können flexibel eingesetzt werden. Im sichtbaren Spektrum aktivierbare Photoinitiatoren können auch durch Sonnenlicht oder eine Strahlenquelle niedrigerer Energie aktiviert werden (insbesondere blaue LEDs), was in einigen Anwendungen vorteilhaft sein kann.

Photoinitiatoren für die radikalische Kettenreaktion werden in zwei Typen unterteilt. Typ-1-Photoinitiatoren erzeugen Radikale direkt in einer Photofragmentation, meist durch alpha-Spaltung. Das gebildete Radikal löst dann direkt die Kettenpolymerisation aus. Typ-2-Photoinitiatoren hingegen abstrahieren ein Wasserstoffatom von einem benachbarten Molekül. Dieses löst dann die Kettenpolymerisation aus. Meist werden tertiäre Amine zugegeben, da diese besonders effektive Startradikale bilden und somit die Reaktivität erhöhen.

Im vorliegenden Dokument bezieht sich der Begriff "hohl" auf das Fehlen jeglicher fester Bestandteile in einem abgeschlossenen Raum. So können hohle Gegenstände, wie beispielsweise hohle Kugeln oder Hohlkugeln gasförmige Bestandteile wie Umgebungsluft oder ein beliebiges Gas im Allgemeinen enthalten. Ebenso kann sich in einer solchen Hohlkugel eine flüchtige Flüssigkeit mit hohem Dampfdruck befinden.

Der Begriff "Ausdehnungstemperatur" bezeichnet im vorliegenden Dokument den Temperaturbereich, bei dem eine Ausdehnung eines expandierbaren Materials stattfindet. Die Ausdehnungstemperatur beginnt ab der Anfangstemperatur der Ausdehnung.

Der Begriff "Ausdehnungskoeffizient" bezeichnet im vorliegenden Dokument wie stark sich ein expandierbares Material bei einer Temperaturänderung ausdehnt, verglichen zum Volumen bei Raumtemperatur. Der Ausdehnungskoeffizient wird normalerweise in Prozent (%) angegeben.

### Härtbare Zusammensetzung

In einer bevorzugten Ausführungsform ist die erfindungsgemässe härtbare Zusammensetzung dadurch gekennzeichnet, dass die härtbare Zusammensetzung durch UV-Vis Strahlung, insbesondere im Bereich von Wellenlängen von 315 bis 415 nm, härtbar ist.

Bevorzugt wird die härtbare Zusammensetzung während mindestens 5 Sekunden, besonders bevorzugt während mindestens 15 Sekunden, ganz besonders bevorzugt während mindestens 30 Sekunden, mit UV-Vis-Strahlung bestrahlt.

Vorzugsweise wird die härtbare Zusammensetzung mit elektromagnetischen Wellen im Bereich von Wellenlängen von 300 bis 750 nm, insbesondere von 350 bis 500 nm bestrahlt.

In einer bevorzugten Ausführungsform wird die härtbare Zusammensetzung mit einer LED-UV Lampe mit Licht im Bereich von Wellenlängen von 315 bis 415 nm bestrahlt. Dabei kann das UV-A Licht auch zusammen mit Umgebungslicht, insbesondere von weiteren Lampen und Beleuchtungseinrichtungen, im Bereich von Vis-Strahlen (380-750 nm) verwendet werden.

Die Bestrahlung der härtbaren Zusammensetzung mit UV-Vis-Strahlung erzeugt Radikale und diese starten wiederum die radikalische Kettenpolymerisation. Durch die Polymerisation der Verbindungen mit (Meth)acrylat Endgruppen V wird eine kovalent vernetzte Zusammensetzung gebildet und eine makroskopisch ausgehärtete Zusammensetzung erhalten.

### Verbindung mit (meth)acrylate Endgruppe V

In einer bevorzugten Ausführungsform ist die erfindungsgemässe härtbare Zusammensetzung dadurch gekennzeichnet, dass die Verbindung mit (Meth)acrylat Endgruppen **V** Monomere mit (Meth)acrylat Endgruppen umfasst, bevorzugt monofuktionelle, multifunktionelle, insbesondere difunktionelle und/oder trifunktionelle (Meth)acrylat Monomere, besonders bevorzugt eine Mischung von difunktionellen und trifunktionelle (Meth)acrylat Monomeren.

Eine Verbindung mit (Meth)acrylat Endgruppen **V** gemäss der vorliegenden Erfindung enthält mindestens eine radikalisch polymerisierbare Gruppe der Formel (I) 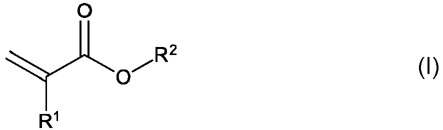 wobei
R¹ ein Wassersatom oder eine Methylgruppe, vorzugsweise ein Wasserstoffatom, darstellt;
R² einen linearen oder verzweigten einwertigen Kohlenwasserstoffrest mit 2 bis 20 Kohlenstoffatomen, der gegebenenfalls eine oder mehrere C-C-Mehrfachbindungen enthält und gegebenenfalls zyklische Reste, insbesondere cycloaliphatische Reste und/oder aromatische Reste, und/oder Heteroatome, insbesondere Stickstoff und/oder Sauerstoff enthält, darstellt.

In einer bevorzugten Ausführungsform enthält die Verbindung mit (Meth)acrylat Endgruppen **V** gemäss der vorliegenden Erfindung mehrere radikalisch polymerisierbare Gruppen, das heisst sie ist multifunktionell. Mögliche multifunktionelle (Meth)acrylat Monomere entsprechen der Formel (II) 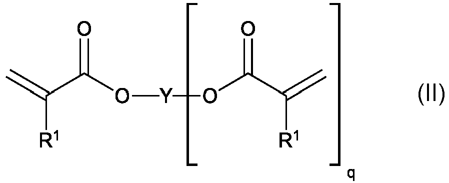 Wobei
R¹ ein Wassersatom oder eine Methylgruppe, vorzugsweise ein Wasserstoffatom, darstellt;
Y einen linearen oder verzweigten Kohlenwasserstoffrest mit 2 bis 20 Kohlenstoffatomen, der gegebenenfalls Heteroatome, insbesondere Stickstoff und/oder Sauerstoff enthält, darstellt;
   darstellt
q einen Wert von 1 bis 2, darstellt.

In einer besonders bevorzugten Ausführungsform entspricht Y einem Trimethylpropan nach Entfernung der OH-Gruppen, oder ein polymeres Diol nach Entfernung der OH-Gruppen.

In einer weiteren besonders bevorzugten Ausführungsform entspricht Y einem Diol, insbesondere einem Pentandiol nach Entfernung der OH-Gruppen, oder einem polymeres Diol nach Entfernung der OH-Gruppen.

Ein difunktionelles (Meth)acrylat Monomer einer Verbindung mit (Meth)acrylat Endgruppen **V** entspricht also vorzugsweise einer Struktur der Formel (II), wobei q einen Wert von 1 darstellt.

Ein trifunktioneller (Meth)acrylat Monomer einer Verbindung mit (Meth)acrylat Endgruppen **V** entspricht also vorzugsweise einer Struktur der Formel (II), wobei q einen Wert von 1 darstellt.

In einer weiteren bevorzugten Ausführungsform ist die erfindungsgemässe härtbare Zusammensetzung dadurch gekennzeichnet, dass die Verbindung mit (Meth)acrylat Endgruppen **V,** Prepolymere mit Polyether- und/oder Polyester-und/oder β-Hydroxylether-Wiederholungseinheiten umfasst.

Prepolymere mit Polyether- und/oder Polyester- und/oder β-Hydroxylether Wiederholungseinheiten einer Verbindung mit (Meth)acrylat Endgruppen **V** weisen sowohl Polyether- und/oder Polyester- und/oder β-Hydroxylether-Wiederholungseinheiten im Prepolymer-Gerüst auf, als auch radikalisch polymerisierbare (Meth)acrylat Endgruppen.

β-Hydroxylether Wiederholungseinheiten können beispielsweise von Epoxygruppen abgeleitet sein.

In einer bevorzugten Ausführungsform ist die erfindungsgemässe härtbare Zusammensetzung dadurch gekennzeichnet, dass die Verbindung mit (Meth)acrylat Endgruppen **V** Urethan-Gruppen aufweist.

Verbindungen mit (Meth)acrylat Endgruppen **V,** die Urethan-Gruppen aufweisen, werden oftmals auch als Urethanacrylate bezeichnet.

Verbindungen mit (Meth)acrylat Endgruppen **V,** die Urethan-Gruppen aufweisen, können erhalten werden aus der Umsetzung eines Isocyanatgruppen-haltigen Polyetherurethan Prepolymer mit einem Hydroxygruppen-haltigen (Meth)acrylat Monomer.

Verbindungen mit (Meth)acrylat Endgruppen **V,** die Urethan-Gruppen aufweise, sind bevorzugt frei von Isocyanatgruppen und weisen insbesondere ausschliesslich Vinyl-Endgruppen auf. Dies kann erreicht werden, indem bei der Herstellung ein stöchiometrisches Verhältnis von 1.0 bis 1.6 mol Hydroxygruppen-haltigen (Meth)acrylat pro Mol-Equivalent Isocyanatgruppen des Isocyanatgruppen-haltigen Polymers verwendet wird.

Dieses Isocyanatgruppen-haltige Polyetherurethan Prepolymer kann erhalten werden aus der Umsetzung von mindestens einem monomeren Diisocyanat mit mindestens einem Polyetherpolyol und/oder Polyesterpolyol.

Als monomeres Diisocyanat geeignet sind handelsübliche aliphatische Diisocyanate, insbesondere 1,5-Pentamethylen-Diisocyanat (PDI), 1,6-Hexandiisocyanat (HDI), 2,2(4),4-Trimethyl-1,6-hexamethylendiisocyanat (TMDI), Toluene Diisocyanat (TDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder-4,4'-diphenylmethandiisocyanat (HMDI), 1,3- oder 1,4-Bis(isocyanatomethyl)cyclohexan, m- oder p-Xylylendiisocyanat (XDI), m-Tetramethylxylylendiisocyanat (TMXDI), oder Gemische davon.

Als Polyetherpolyol geeignet sind Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen.

Besonders bevorzugt sind Polyoxypropylen-Diole, Polyoxypropylen-Triole, oder Ethylenoxid-terminierte Polyoxypropylen-Diole oder -Triole. Dies sind Polyoxyethylenpolyoxypropylen-Mischpolyole, die insbesondere dadurch erhalten werden, dass Polyoxypropylen-Diole oder -Triole nach Abschluss der Polypropoxylierungsreaktion mit Ethylenoxid weiter alkoxyliert werden und dadurch schliesslich primäre Hydroxylgruppen aufweisen.

Das für die Herstellung des Urethanacrylat Prepolymer benötigte Hydroxygruppen-haltige (Meth)acrylat ist nicht besonders limitiert, solange es eine Acrylatgruppe sowie eine Hydroxylgruppe aufweist. Besonders geeignete Hydroxygruppen-haltige (Meth)acrylate sind Hydroxyethylmethacrylat (HEMA) und Hydroxyethylacrylat (HEA).

In einer weiteren Ausführungsform ist die erfindungsgemässe härtbare Zusammensetzung dadurch gekennzeichnet, dass die Verbindung mit (Meth)acrylat Endgruppen V ein Epoxyacrylat umfasst. Epoxyacrylate entstehen durch eine chemische Reaktion zwischen Epoxidharzen und Acrylsäure oder deren Derivate. Die Kombination dieser beiden funktionellen Gruppen in einem einzigen Molekül ergibt ein Epoxyacrylat. Die Epoxidgruppe ist häufig an das Rückgrat des Moleküls gebunden, während die Acrylatgruppen in der Regel am Ende der Molekülkette oder als anhängende Gruppen zu finden sind. Geeignet sind beispielsweise die kommerziell erhältlichen Chemikalien Ebecryl 3416 von Allnex (65% Bisphenol A basiertes Epoxyacrylat in tripropylene glycol diacrylat Verdünner) oder Ebecryl 3300 von Allnex (65% Bisphenol A basierte Epoxyacrylat Oligomer in dipropylene glycol diacrylat Verdünner).

In einer weiteren Ausführungsform ist die erfindungsgemässe härtbare Zusammensetzung dadurch gekennzeichnet, dass die Verbindung mit (Meth)acrylat Endgruppen **V** Acrylate auf Kautschukbasis, auch bekannt als Acrylat-terminierte Kautschuke oder kautschukmodifizierte Acrylate umfasst. Acrylat-terminierte Kautschuke sind eine Klasse von Materialien, die die elastomeren Eigenschaften von Kautschuk mit der Reaktivität und Vielseitigkeit von Acrylatgruppen kombinieren.

Acrylate auf Kautschukbasis werden in der Regel durch die Einführung von funktionellen Acrylatgruppen in das Grundgerüst eines Kautschukpolymers synthetisiert. Dies kann durch verschiedene chemische Reaktionen erreicht werden wie beispielsweise mittels radikalisch initiierter Emulsionspolymerisation oder per Suspensionspolymerisation.

Vorzugsweise enthält die erfindungsgemässe härtbare Zusammensetzung zwischen 70 und 95 Gew.-%, besonders bevorzugt zwischen 75 und 90 Gew.-%, bezogen auf die gesamte Zusammensetzung, der Verbindung mit (Meth)acrylat Endgruppen **V.**

### Photoinitiator P

In einer bevorzugten Ausführungsform ist die erfindungsgemässe härtbare Zusammensetzung dadurch gekennzeichnet, dass der Photoinitiator **P** mindestens ein Typ-1- und/oder mindestens ein Typ-2-Photoinitiator, bevorzugt eine Mischung von Typ-1- und Typ-2-Photoinitiatoren umfasst.

UV-Vis-aktivierbare Photoinitiatoren sind dem Fachmann aus dem Gebiet der radikalisch härtbaren Zusammensetzungen bekannt. Für die vorliegende Erfindung sind prinzipiell alle gängigen Photoinitiatoren als Photoinitiator **P** geeignet, die für die radikalische Aushärtung von Vinyl-Gruppen, insbesondere (Meth)Acrylaten, geeignet sind und können üblicherweise ohne Einschränkung verwendet werden. Es ist jedoch vorteilhafterweise darauf zu achten, dass die Photoinitiatoren gut mit der jeweiligen Zusammensetzung mischbar sind.

In einer bevorzugten Ausführungsform ist die erfindungsgemässe härtbare Zusammensetzung dadurch gekennzeichnet, dass der Photoinitiator **P** bei 23°C fest und/oder flüssig ist

Häufig eingesetzte Typ-1-Photoinitiatoren leiten sich von Acylphosphinoxiden ab. Häufig eingesetzte Typ-2-Photoinitiaoren leiten sich von α-Hydroxy-, α-Alkoxy- oder α-Amino-Arylketonen, insbesondere Benzophenone und deren Derivate und Thioxanthonen ab.

Geeignete als Photoinitiatoren **P** sind unter anderem Aldehyde und deren substituierte Derivate, Ketone und deren substituierte Derivate, Chinine und deren substituierte Derivate; Thioxanthone, wie 2-Isopropylthioxanthon und 2-Dodecylthioxanthon, und bestimmte chromophorsubstituierte Vinylhalogenmethylsymtriazine, wie 2-4-Bis-(trichlormethyl)-6-(3',4'-dimethoxyphenyl)-sym-triazin und Acyl phosphinoxide, wie 2,4,6-Trimethylbenzoyldiphenylphosphinoxid oder Bis(2,4,6-trimethylbenzoyl)-phenylphosphinoxid.

Spezifische Beispiele für geeignete Typ-1-Photoinitiatoren, welche im UV-Vis-Bereich aktivierbar sind, sind Bis(2,4,6-trimethylbenzoyl)-phenylphosphinoxid und 2-Hydroxy-2-methyl-1-phenyl-propan-1-on und Ethyl(2,4,6-Trimethylbenzoyl)-phenyl phosphinat (erhältlich als IGM Resins OMNIRAD^{®} 2022), 2,4,6-Trimethylbenzoyl-diphenylphosphinoxid (erhältlich als BASF LUCIRIN^{®} TPO), 2,4,6-Trimethylbenzoylethoxyphenylphosphinoxid (erhältlich als BASF LUCIRIN^{®} TPO-L), Bis(2,4,6-trimethylbenzoyl)-phenylphosphinoxid (erhältlich als Ciba IRGACURE^{®} 819), 2,4,6-Trimethylbenzyl-diphenylphosphinoxid und andere Acylphosphine;

Spezifische Beispiele für geeignete Typ-2-Photoinitiatoren, welche im UV-Vis-Bereich aktivierbar sind, sind 2-Methyl-1-(4-methylthio)phenyl-2-(4-morphorlinyl)-1-propanon (erhältlich als Ciba IRGACURE^{®} 907) und 1-(4-(2-Hydroxyethoxy)phenyl)-2-hydroxy-2-methylpropan-1-on (erhältlich als Ciba IRGACURE^{®} 2959); 2-Benzyl-2-dimethylamino 1-(4-morpholinophenyl)butanon-1 (erhältlich als Ciba IRGACURE^{®} 369); 2-Hydroxy-1-(4-(4-(2-Hydroxy-2-methylpropionyl)-benzyl)-phenyl)-2-methylpropan-1-on (erhältlich als Ciba IRGACURE^{®} 127); 2-Dimethylamino-2-(4-methylbenzyl)-1-(4-morpholin-4-ylphenyl)-butanon (erhältlich als Ciba IRGACURE^{®} 379); Titanocene; Isopropylthioxanthon; 1-Hydroxy-cyclohexylphenylketon; Benzophenon; 2,4,6-Trimethylbenzophenon; 4-Methylbenzophenon; Diphenyl-(2,4,6-trimethylbenzoyl)phosphinoxid; 2,4,6-Trimethylbenzoylphenylphosphinsäureethylester; Oligo(2-Hydroxy-2-methyl-1-(4-(1-methylvinyl)phenyl)propanon); 2-Hydroxy-2-methyl-1-phenyl-1-propanon; Benzyl-Dimethylketal; und Mischungen davon. Weitere UV/VIS-aktivierbare Typ-2-Photoinitiatoren sind 2,2-Dimethyl-2-hydroxy-acetophenon; 1-Hydroxy-1-cyclohexyl-phenylketon; 2,2-Dimethoxy-2-phenylacetophenon, Benzophenon;

Besonders bevorzugt sind Mischungen aus Typ-1- und Typ-2-Photoinitiatoren, insbesondere Bis(2,6-dimethoxybenzoyl)-2,4,4-trimethylpentylphosphinoxid und 1-Phenyl-2-hydroxy-2-methylpropanon; Mischungen aus Bis(2,6-dimethoxybenzoyl)-2,4,4-trimethylpentylphosphinoxid und 1-Hydroxycyclohexylphenylketon; Bis(2,4,6-trimethylbenzoyl)-phenylphosphinoxid; und Campherchinon.

Beispiele für kationische Photoinitiatoren sind lodonium- und Sulfoniumsalze. Zu den bevorzugten Photoinitiatoren gehören 2-Benzyl-2-dimethylamino-1-(4-morpholinophenyl)-butan-1-on und/oder 2-Methyl-1-(4-(methylthio)phenyl)-2-morpholino-propan-1-on.

Besonders bevorzugt als Photoinitiator **P** sind Bis(2,4,6-trimethylbenzoyl)-phenylphosphinoxid und 2-Hydroxy-2-methyl-1-phenyl-propan-1-on und Ethyl Phenyl(2,4-6-trimethylbenzoyl)phosphinat und Mischungen davon.

Vorzugsweise enthält die erfindungsgemässe härtbare Zusammensetzung zwischen 0.1 und 5 Gew.-%, besonders bevorzugt zwischen 0.1 und 2.5 Gew.-%, bezogen auf die gesamte Zusammensetzung, an Photoinitiator **P.**

### Expandierbares Material E

In einer bevorzugten Ausführungsform umfasst das thermisch expandierbare Material E der erfindungsgemässen härtbaren Zusammensetzung ein physikalisches und/oder chemisches Treibmittel.

Das thermisch expandierbare Material **E** führt also unter der Zufuhr von Wärme zu einer Volumenexpansion.

Zu den chemischen Treibmitteln gehören insbesondere N₂-generierende Substanzen wie beispielsweise Isocyanat, Azodicarbonamid, Hydrazine, Hydrazide und andere stickstoffhaltige Stoffe, sowie Natriumbicarbonat und Titanhydrid. Unter Einwirkung eines chemischen oder thermischen Stimulus werden gasförmige Produkte und andere Nebenprodukte durch eine chemische Reaktion des chemischen Triebmittels gebildet. Bei dieser chemischen Reaktion entstehen Verbindungen mit niedrigem Molekulargewicht, die als Treibgas wirken. Die einmal gebildeten niedermolekularen Verbindungen kehren nie wieder in das ursprüngliche Triebmittel zurück; die Reaktion ist irreversibel.

Physikalische Treibmittel hingegen erhöhen durch einen Phasenübergang von fest oder flüssig zu gasförmig ihr Volumen, ohne dass eine chemische Reaktion mit einem anderen Stoff vorliegt. Ebenso findet eine Volumenexpansion im gasförmigen Zustand unter dem Einfluss von Wärme statt. Häufig verwendete physikalische Treibmittel sind Kohlendioxid, Stickstoff, Distickstoffdioxid aber auch Kohlenwasserstoffe, die insbesondere vom Rest der Zusammensetzung abgekapselt sind, beispielsweise indem sie in einer Hohlkugel eingeschlossen sind.

Vorzugsweise besitzt das thermisch expandierbare Material einen thermischen Ausdehnungskoeffizienten von mehr als 500%, bevorzugt von mehr als 1000%, besonders bevorzugt von mehr als 5000%, bei einer bestimmten Ausdehnungstemperatur besitzen.

Vorzugsweise enthält die erfindungsgemässe härtbare Zusammensetzung zwischen 5 und 25 Gew.-%, besonders bevorzugt zwischen 5 und 20 Gew.-%, ganz besonders bevorzugt zwischen 8 und 16 Gew.-%, bezogen auf die gesamte Zusammensetzung, an thermisch expandierbarem Material **E.**

In einer bevorzugten Ausführungsform ist die erfindungsgemässe härtbare Zusammensetzung dadurch gekennzeichnet, dass das thermisch expandierbare Material **E** aus Mikrohohlkugeln besteht.

In einer bevorzugten Ausführungsform ist die erfindungsgemässe härtbare Zusammensetzung dadurch gekennzeichnet, dass das thermisch expandierbare Material **E** aus Mikrohohlkugeln besteht, bei der eine thermoplastische Hülle eine gasförmige oder flüssige organische Verbindung einschliesst.

Bei der gasförmigen oder flüssigen organischen Verbindung kann es sich um ein beliebiges Gas handeln, das üblicherweise für thermische expandierbare Mikrohohlkugeln verwendet wird. Vorzugsweise ist das Gas ein gesättigter Kohlenwasserstoff oder ein Ether. Geeignete Kohlenwasserstoffe sind insbesondere Butan, Isobutan, Propan, Pentan. Geeignete Ether sind Dimethylether, Diethylether oder Tetrahydrofuran (THF).

In einer weiteren bevorzugten Ausführungsform haben die Mikrohohlkugeln eine Teilchendichte von 20 bis 40 kg/m3, vorzugsweise 25 bis 35 kg/m3, gemessen nach ISO 1183-1.

In einer bevorzugten Ausführungsform ist die erfindungsgemässe härtbare Zusammensetzung dadurch gekennzeichnet, dass das thermisch expandierbare Material **E** aus Mikrohohlkugeln besteht, wobei deren mittlere Teilchengrössenverteilung D₅₀ im nicht expandierten Zustand im Bereich von 10 bis 80 um, bevorzugt von 20 bis 60 um, gemessen nach ISO 13320, liegt.

Besonders geeignet als thermisch expandierbares Material **E** sind kommerziell erhältliche Mikrohohlkugeln wie beispielsweise Expancel^{®} (erhätlich von Nouryon), Matsumoto Microsphere^{®} F und FN series (erhältlich von Matsumoto Yushi-Seiyaku) und UNICELL-MS (erhätlich von Tramaco).

### Additive AD

In einer bevorzugten Ausführungsform ist die erfindungsgemässe härtbare Zusammensetzung dadurch gekennzeichnet, dass die härtbare Zusammensetzung zusätzlich Additive **AD,** insbesondere ausgewählt aus Haftvermittler, Synergisten und Benetzungsadditive, Rheologie-Modifizierer, Füllstoffe, Weichmacher, Pigmente, Stabilisatoren, Carbonsäuren und Lösemittel enthält.

Geeignete Haftvermittler sind Organoalkoxysilane, (Meth)acrylosilane, Anhydridosilane, Carbamatosilane, Alkylsilane oder Iminosilane oder auch Phosphatacrylate.

Synergisten sind Substanzen, die die Wirksamkeit von Photoinitiatoren in photochemischen Prozessen, insbesondere bei der radikalischen Kettenpolymerisation, verstärken. Sie verbessern die Effizienz der Photoinitiatoren, indem sie deren Reaktivität erhöhen oder die Bildung von Radikalen fördern. Geeignete Synergisten sind Amine, Thioester oder lodverbindungen. Besonders bevorzugte Synergisten der vorliegenden Erfindung sind Acrylierte Amine, wie sie beispielweise als Miramer AS2010 von Miwon Specialty Chemical Co., Ltd. Erhätlich sind.

Geeignete Benetzungsadditive sind modifizierte Polysiloxane, insbesondere modfizierte Polydimethylsiloxane. Besonders bevorzugte Benetzungsadditive der vorliegenden Erfindung sind multi-acrylische modifizierte Polydimethylsiloxane, wie sie beispielsweise als Byk-UV 3505 von BYK Additives & Instruments erhältlich sind.

Vorzugsweise enthält die erfindungsgemässe härtbare Zusammensetzung zwischen 0 und 20 Gew.-%, besonders bevorzugt zwischen 5 und 20 Gew.-%, ganz besonders bevorzugt zwischen 5 und 15 Gew.-%, bezogen auf die gesamte Zusammensetzung, an Additiven **AD**.

In einer bevorzugten Ausführungsform ist die erfindungsgemässe härtbare Zusammensetzung dadurch gekennzeichnet, dass die Zusammensetzung, jeweils bezogen auf die gesamte Zusammensetzung
- Zwischen 70 Gew.-% und 95 Gew.-% Verbindung mit (Meth)acrylat Endgruppen **V;**
- Zwischen 0.1 Gew.-% und 5 Gew.-% Photoinitiator **P**;
- Zwischen 5 Gew.-% und 25 Gew.-% thermisch expandierbares Material **E;**
- Zwischen 0 Gew.-% und 20 Gew.-% Additive **AD**;
sowie gegebenenfalls weiterer Inhaltsstoffe enthält, wobei die Summe aller Inhaltsstoffe 100 Gew.-% beträgt.

Die erfindungsgemässe Zusammensetzung wird bevorzugt bei Raumtemperatur formuliert und gemischt. Dabei wird die Verbindung mit (Meth)Acrylat Endgruppen **V** mit Photoinitiator **P** und den optionalen Additiven **AD** in gängigen Mischaparaturen (Speedmixer oder Batchmischer) zwischen 1 und 15 Minuten gemischt. Sobald eine homogene Masse entstanden ist, wird das thermisch expandierbare Material **E** zugegeben und weiterhin gemischt bis eine homogene, klumpenfreie Masse entsteht. Die härtbare Zusammensetzung wird entweder direkt appliziert oder unter Licht- und Luftausschluss in einem geeigneten Gefäss gelagert.

Die erfindungsgemässe Zusammensetzung ist bevorzugt so formuliert, dass sie bei Raumtemperatur, eine flüssige bis pastöse, unter üblichem Auspressdruck fliessfähige Konsistenz mit strukturviskosen Eigenschaften aufweist. Eine solche Zusammensetzung kann aus handelsüblichen Kartuschen oder Fässern oder Hobbock mittels einer geeigneten Vorrichtung appliziert werden, beispielsweise mit einem Melaminschwamm oder einem Rakel (Spiral oder Draht). Die Zusammensetzung kann auch gesprüht oder gedruckt (Inkjet, Piezo) werden.

### Klebeverbund

Ein weiterer Gegenstand der Erfindung ist ein Klebeverbund, umfassend
(a) einem Substrat **S**;
(b) eine ausgehärtete erfindungsgemässe härtbare Zusammensetzung, welche auf dem Substrat **S** aus (a) aufgebracht ist;
(c) eine ausgehärtete Klebstoff-Zusammensetzung, welche auf der ausgehärteten härtbaren Zusammensetzung aus (b) aufgebracht ist.

Die erfindungsgemässe härtbare Zusammensetzung aus (b) entspricht dabei der härtbaren Zusammensetzung enthaltend
- mindestens eine Verbindung mit (Meth)acrylat Endgruppen **V;**
- mindestens ein Photoinitiator **P**;
- mindestens ein thermisch expandierbares Material **E;**
- optional Additive **A.**
nach derer Aushärtung, und umfasst alle obengenannten bevorzugten Ausführungsformen dieser härtbaren Zusammensetzung.

Der Klebeverbund umfasst einen schichtweisen Aufbau. Es können jeweils weitere Schichten dem Klebeverbund hinzugefügt werden. Beispielsweise kann auf die ausgehärtete Klebstoff-Zusammensetzung eine weitere ausgehärtete härtbare Zusammensetzung folgen und auf diese wiederum ein weiteres Substrat **S**. Dies kann beliebig oft wiederholt werden. Die jeweils eingesetzten Substrate **S** müssen nicht identisch sein.

Abgesehen vom schichtweisen Aufbau ist die räumliche Ausgestaltung des Klebeverbunds vorzugsweise den Anforderungen an den jeweiligen Klebeverbund angepasst.

Die Schichtdicken der ausgehärteten erfindungsgemässen härtbaren Zusammensetzung aus (b) und der ausgehärteten Klebstoff-Zusammensetzung aus (c) werden vorzugsweise den Anforderungen an den jeweiligen Klebeverbund angepasst.

Vorzugsweise entspricht die Schichtdicke des Substrats **S** aus (a) allen gängigen Grössen, die als Substrate in einem Klebeverbund verwendet werden. Auch Folien oder sehr dünne Materialen können als Substrat **S** verwendet werden.

Vorzugsweise ist die Schichtdicke der ausgehärteten erfindungsgemässen härtbaren Zusammensetzung aus (b) zwischen 5 und 200 µm, bevorzugt zwischen 10 und 150 µm, besonders bevorzugt zwischen 20 und 100 µm dick.

Vorzugsweise ist die Schichtdicke der ausgehärteten Klebstoff-Zusammensetzung aus (c) zwischen 100 und 3'000 µm, bevorzugt zwischen 250 und 1'000 µm, besonders bevorzugt zwischen 300 und 500 µm dick.

Bevorzugt bildet die die ausgehärtete härtbare Zusammensetzung aus (b) eine Funktionsschicht. Diese Funktionsschicht verbessert sowohl die Haftung der Klebstoff-Zusammensetzung aus (c) mit dem Substrat **S** aus (a), ermöglicht aber auch das Ablösen des Klebeverbunds.

In einer bevorzugten Ausführungsform ist der erfindungsgemässe Klebeverbund dadurch gekennzeichnet, dass die Klebstoff-Zusammensetzung bei Raumtemperatur unter Vernetzung aushärtet.

In einer bevorzugten Ausführungsform ist der erfindungsgemässe Klebeverbund dadurch gekennzeichnet, dass die Klebstoff-Zusammensetzung ein Epoxidharz-basierter Klebstoff, Polyurethan-basierter Klebstoff, ein Poly(meth)acrylat-basierter Klebstoff, ein Klebstoff auf Basis Silan-terminierter Polymer (STP) oder ein Silikon-Klebstoff, bevorzugterweise ein Epoxidharz-basierter Klebstoff umfasst.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten.
- Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)m ethan, 2, 2-B is(3, 5-dim ethyl-4-hydroxyphenyl )propan, 2,2-B i s(3, 5-d i brom o-4-hydroxyphenyl )propan, 2, 2-B is( 4-hydroxy-3-tert. butylphenyl)propan, 2,2-Bis( 4-hydroxyphenyl)butan (Bisphenol-B), 3, 3-Bis( 4-hydroxyphenyl)pentan, 3,4-Bis( 4-hydroxyphenyl)hexan, 4,4-Bis( 4-hydroxyphenyl)heptan, 2,4-Bis( 4-hydroxyphenyl)-2-methylbutan, 2, 4-Bis(3, 5-dimethyl-4-hydroxyphenyl)-2-methylbutan, 1, 1-Bis( 4-hydroxyphenyl)cyclohexan (Bisphenol-Z), 1,1-Bis(4-hydroxyphenyl)-3,3,5-trimethylcyclohexan (Bisphenol-TMC), 1, 1-Bis( 4-hydroxyphenyl)-1-phenylethan, 1,4-Bis[2-( 4-hydroxyphenyl)-2-propyl]benzol(Bisphenol-P), 1,3-Bis[2-(4-hydroxyphenyl)-2-propyl]benzol (Bisphenol

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C2- bis C30-Alkoholen, insbesondere Ethylenglykol, Propylenglykol, Butylenglykol,
- Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythritol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -Fo der-A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Bevorzugt ist das Epoxidharz ein Flüssigharz oder eine Mischung enthaltend zwei oder mehr Epoxid-Flüssigharze. Als "Epoxid-Flüssigharz" wird ein technisches Polyepoxid mit einer Glasübergangstemperatur unterhalb von 25°C bezeichnet. Gegebenenfalls enthält die Harz-Komponente zusätzlich Anteile van Epoxid Festharz. Das Epoxidharz ist insbesondere ein Flüssigharz auf der Basis eines Bisphenols oder Novolaks, insbesondere mit einem mittleren Epoxid-Equivalentgewicht im Bereich von 156 bis 210 g/eq.

Als Härter für das Epoxidharz geeignet sind bevorzugt Amine.

Bevorzugt sind Amine mit aliphatischen Aminogruppen und mindestens drei Aminwasserstoffen, insbesondere N-Benzyl-1 ,2-ethandiam in, N-Benzyl-1 ,2-propandiamin, N-Benzyl-1 , 3-bis( am inomethyl)benzol, N-(2-Ethylhexyl)-1 ,3-bis(aminomethyl)benzol, 2,2-Dimethyl-1 ,3-propandiamin, 1,3-Pentandiamin (DAMP), 1,5-Pentandiamin, 1,5-Diamino-2-methylpentan (MPMD), 2-Butyl-2-ethyl-1 ,5-pentandiamin (C11-Neodiamin), 1,6-Hexandiamin, 2,5-Dimethyl-1 ,6-hexandiamin, 2,2(4),4-Trimethyl-1 ,6-hexandiamin (TMD), 1,7-Heptandiamin, 1,8-Octandiamin, 1,9-Nonandiamin, 1, 10-Decandiamin, 1, 11-Undecandiamin, 1, 12-Dodecandiamin, 1,2-, 1,3- oder 1,4-Diaminocyclohexan, 1,3-Bis(aminomethyl)cyclohexan, 1,4-Bis(aminomethyl)cyclohexan, Bis( 4-am inocyclohexyl)methan, Bis( 4-amino-3-methylcyclohexyl)methan, Bis( 4-am ino-3-ethylcyclohexyl )m ethan, Bis( 4-am ino-3, 5-d i m ethylcyclohexy l)methan, Bis(4-am ino-3-ethyl-5-methylcyclohexyl )methan, 1-Am ino-3-am inomethyl-3,5, 5-trimethylcyclohexan (IPDA), 2(4)-Methyl-1,3-diaminocyclohexan, 2,5(2,6)-Bis( aminomethyl)bicyclo[2.2.1]heptan (NBDA), 3( 4 ), 8(9)-Bis( am inomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8, 10-tetraoxaspiro[S.S]undecan, 1,3-Bis(aminomethyl)benzol (MXDA), 1,4-Bis(aminomethyl)benzol, Bis(2-aminoethyl)ether, 3,6-Dioxaoctan-1 ,8-diam in, 4, 7-Dioxadecan-1, 10-diam in, 4, 7-Dioxadecan-2, 9-diamin, 4,9-Dioxadodecan-1, 12-diamin, 5,8-Dioxadodecan-3, 10-diamin, 4,7, 1 0-Trioxatridecan-1, 13-diamin oder höhere Oligomere dieser Diamine, Bis(3-aminopropyl)polytetrahydrofurane oder andere Polytetrahydrofurandiamine, Polyoxyalkylendi oder-triamine, insbesondere Polyoxypropylendiamine oder Polyoxypropylen triamine wie Jeffamine^{®} D-230, Jeffamine^{®} D-400 oder Jeffamine^{®} T-403 (alle von Huntsman), Furan-basierte Amine wie N-Furfuryl-1 ,2-ethandiamin, 2,5-Bis(aminomethyl) furan, 2, 5-Bis( am inomethyl)tetrahydrofuran, Bis( 5-am inomethylfuran-2-yl)methan, Bis( 5-am inomethyltetrahydrofuran-2-yl)methan, 2,2-Bis( 5-am inomethylfuran-2-yl)propan oder 2,2-B is( 5-am inom ethyltetrahydrofuran-2-yl)propan, oder Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiam in, N3-(3-Am inopentyl)-1 ,3-pentandiam in, N5-(3-Amino-1-ethyl-propyl)-2-methyl-1,5-pentandiamin, N,N'-Bis(3-amino-1-ethylpropyl)-2-methyl-1 ,5-pentandiam in, 3-(2-Am inoethyl)am inopropylam in, Bis(hexamethylen )triam in (BHMT), N-Aminoethylpiperazin, 3-Dimethylaminopropylamin (DMAPA), 3-(3-(Di methylam ino )propylam ino )propylam in (DMAPAPA), aminfunktionelle Addukte der genannten Amine mit Epoxiden, Phenalkamine, welche Umsetzungsprodukte von Cardanol mit Aldehyden, insbesondere Formaldehyd, und Polyaminen darstellen oder eine Mischung aus zwei oder mehr dieser Amine.

In einer bevorzugten Ausführungsform ist der Silikon-Klebstoff insbesondere ein Raumtemperaturvulkanisierender Silikonkautschuk (RTV), insbesondere ein RTV-1 oder RTV-2 Silikon-Klebstoff.

In einer bevorzugten Ausführungsform ist der erfindungsgemässe Klebeverbund dadurch gekennzeichnet, dass das Substrat **S** Glas, Metalle, Kunststoffe und/oder weitere Materialen umfasst.

Geeignete Substrate **S,** auf welchen der erfindungsgemässen härtbaren Zusammensetzung aufgebracht werden können und welche in einem Klebeverbund verklebt werden können, sind insbesondere
- Glas, Glaskeramik oder mit Siebdruckkeramik beschichtetes Glas oder Polycarbonat;
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, insbesondere kathodisch tauchlackierte (KTL) oder pulverbeschichtete Metalle oder Legierungen oder lackierte Bleche;
- Farben oder Lacke, insbesondere Automobildecklacke;
- ausgehärtete Klebstoffe, insbesondere auf der Basis von Polyurethan, silanmodifiziertem Polymer oder Polysulfid, insbesondere gealterte Klebstoffe (Restkleberaupe), oder Karosserieflansch, welcher durchgehend oder stellenweise Restkleberaupe aufweist;
- Kunststoffe wie Hart- oder Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Reparatur- oder Nivelliermassen auf Basis PCC (Polymer-modifizierter Zementmörtel) oder ECC (Epoxidharz-modifizierter Zementmörtel);
- Isolierschäume, insbesondere aus EPS, XPS, PUR, PIR, Steinwolle, Glaswolle oder geschäumtem Glas (Foamglas);
- Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor, lackierte Fliesen oder gestrichener Beton, Asphalt oder Bitumen.
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites.

Die Substrate können bei Bedarf vor dem Applizieren vorbehandelt werden, insbesondere durch physikalische und/oder chemische Reinigungsverfahren.

### Ablösen des Klebeverbunds

Ein weiterer Aspekt der Erfindung ist ein Verfahren zum Ablösen des erfindungsgemässen Klebeverbunds, umfassend die folgenden Schritte:
i) Erwärmen des Klebeverbunds auf mindestens die Expansionstemperatur des thermisch expandierbaren Materials **E** während mindestens 5 Sekunden, bevorzugt während mindestens 30 Sekunden, besonders bevorzugt während 1 Minute, wobei eine Expansionstemperatur von mindestens 80°C, bevorzugt mindestens 100°C, besonders bevorzugt mindestens 120°C erreicht wird;
ii) Trennen der ausgehärteten Zusammensetzung vom Substrat **S,** direkt nach dem Schritt i) oder nach Abkühlen des Klebeverbunds auf Raumtemperatur, bevorzugt direkt nach dem Schritt i).

Das Erwärmen des Klebeverbunds kann mittels konduktive Wärmeübertragung passieren. Bevorzugt erfolgt die konduktive Wärmeübertragung mittels eines Heizkörpers oder Heizmantels, der an der Stelle angelegt wird, wo der Klebeverbund abgelöst werden soll.

Eine weitere bevorzugte Variante zum Erwärmen des Klebeverbunds besteht in der konvektiven Wärmeübtragung, beispielsweise durch einen Heizstrahler oder Heissluftfön («heat gun»).

Besonders bevorzugt ist eine induktive Erwärmung des Klebeverbunds, insbesondere im Falle eines metallischen Substrats **S**.

Eine weitere bevorzugte Variante zum Erwärmen des Klebeverbunds mittels elektromagnetischer Strahlung, beispielsweise durch eine Infrarotlampe.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" (NK) wird eine Temperatur von 23±1 °C und eine relative Luftfeuchtigkeit von 50±5% bezeichnet.

### Herstellung härtbare Zusammensetzung

Die härtbaren Zusammensetzungen des Vergleichsbejspiels **Z1** (Ref.) und der erfindungsgemässen Zusammensetzungen **Z2, Z3, Z4, Z5** und **Z6** wurden mit den Chemikalien aus Tabelle 1 und in den Gewichtsprozenten, bezogen auf die jeweilige Zusammensetzung, aus Tabelle 2 bereitgestellt.

Zuerst wurden die Verbindungen mit (Meth)acrylat Endgruppen **V** und der Photoinitiator **P** und zusätzliche Additive **AD** während 1 Minute in einem Speedmixer bei 3500 rpm gemischt, danach wurde das thermisch expandierbare Material E beigegeben und weiter gemischt bis eine homogene, klumpenfreie Masse entstanden ist. Die härtbare Zusammensetzung wurde dann direkt appliziert.

Die härtbare Zusammensetzung im Vergleichsbeispiel **Z1** (Ref.) ist nicht erfindungsgemäss, da diese Zusammensetzung kein thermisch expandierbares Material E enthält.

### Herstellung Klebeverbund

Mit den härtbaren Zusammensetzungen **Z1** (Ref.), **Z2, Z3, Z4, Z5,** und **Z6** wurden erfindungsgemässe Klebeverbunde hergestellt. Ebenfalls wurde ein weiteres Vergleichsbeispiel **Z0** (Ref.) hergestellt. Bei **Z0** (Ref.) wurde allerdings keine erfindungsgemässe härtbare Zusammensetzung verwendet, der Klebeverbund **Z0** (Ref.) besteht folglich nur aus Substrat **S** und einer Klebstoff-Zusammensetzung.

Als Substrat **S** wurde in allen Beispielen **Z0** (Ref.), **Z1** (Ref.), **Z2, Z3, Z4, Z5,** und **Z6** jeweils zwei feuerverzinkte Stahlbleche in Dimensionen von 100 x 25 x 1.2 mm, erhältlich beispielsweise von Rocholl, verwendet.

Für das Beispiel **Z0** (Ref.) wurden zwei der oben genannten, unbehandelten Stahlbleche mit circa 300 µm einer kommerziell erhältlichen Klebstoff-Zusammensetzung verklebt. Verwendet wurde SikaPower^{®}-1277 (erhältlich von Sika).

In den Beispielen **Z1** (Ref.) und **Z2** wurde als Klebstoff-Zusammensetzung ein zweikomponentiger Epoxidharzklebstoff mit Aminen als Härterkomponente verwendet (SikaPower^{®}-477 R).

Für die Beispiele **Z3, Z4, Z5,** und **Z6** wurde als Klebstoff-Zusammensetzung ein zweikomponentiger Epoxidharzklebstoff mit Aminen als Härterkomponente verwendet (SikaPower^{®}-1277).

Für die Beispiele **Z1** (Ref.) und **Z2** wurde zuerst auf den oben genannten Stahlblechen circa 20 µm der härtbaren Zusammensetzung **Z1** (Ref.) resp. **Z2** aufgetragen. Nach einer Wartezeit von 5 Minuten wurde die härtbare Zusammensetzung mit einer LED-UV Lampe (LED-UV HANDcure von IST METZ GmbH & Co. KG) mit Licht im Bereich von Wellenlängen von 315 bis 415 nm während circa 5 Sekunden bestrahlt. Danach wurden die beiden Stahlbleche mit der ausgehärteten härtbaren Zusammensetzung mit 300 µm Klebstoff-Zusammensetzung (SikaPower^{®}-477 R) verklebt.

Für die Beispiele **Z3, Z4, Z5,** und **Z6** wurden zuerst auf zwei der oben genannten Stahlbleche circa 100 µm der härtbaren Zusammensetzung **Z3** bis **Z6** mittels aufgetragen. Nach einer Wartezeit von 5 Minuten wurde die härtbare Zusammensetzung mit einer LED-UV Lampe (LED-UV HANDcure von IST METZ GmbH & Co. KG) mit Licht im Bereich von Wellenlängen von 315 bis 415 nm während circa 5 Sekunden bestrahlt. Danach wurden die beiden Stahlbleche mit der ausgehärteten härtbaren Zusammensetzung mit 300 µm Klebstoff-Zusammensetzung (SikaPower^{®}-1277) verklebt.

### Testmethoden

Bei den aus **Z0** (Ref.), **Z1** (Ref.), **Z2, Z3, Z4, Z5,** und **Z6** hergestellten Klebeverbunde wurden bei Normklima die Zugscherfestigkeit getestet.

Ebenso wurden die aus **Z0** (Ref.), **Z1** (Ref.), **Z2, Z3, Z4, Z5,** und **Z6** hergestellten Klebeverbunde dem erfindungsgemässen Verfahren zum Ablösen des Klebeverbunds unterzogen. Dabei wurde der Klebeverbund während 1 Minute mittels zweier Heizblöcke, die auf jeweils einer Seite des Testaufbaus angebracht wurden und in direktem Kontakt mit dem Klebeverbund waren, auf 120°C respektive auf 130°C aufgewärmt. Dann wurde die Zugscherfestigkeit des erwärmten Klebeverbunds getestet.

Zur Bestimmung der **Zugscherfestigkeit** wurden die hergestellten Klebeverbunde gemäss DIN EN-1465 bei einer Zuggeschwindigkeit von 10 mm/min geprüft.

### Chemikalien

**Tabelle 1: Verwendete Chemikalien.**

| **Name** | **Beschreibung** | **Handelsname** |
|---|---|---|
| **V1-1** | 3-Methyl 1,5-pentanediol diacrylat | SR341 (Sartomer) |
| **V1-2** | Ethoxyliertes 3-Trimethylolpropan Triacrylat | SR454 (Sartomer) |
| **V2-1** | Urethan Acrylat | Ebecryl 4250 (Allnex) |
| **V2-2** | Urethan Acrylat | Ebecryl 242N (Allnex) |
| **V3** | Polyester Acrylat | Ebecryl 5850 (Allnex) |
| **V4** | Modifizertes Bisphenol A Epoxy Diacrylat | Ebecryl 3300 (Allnex) |
| **P1-1** | Typ-1-Photoinitiator Mischung aus 2-Hydroxy-2-methyl-1-phenyl propanone; Bis(2,4,6-Trimethylbenzoyl) phenylphosphin oxid; | Omnirad 2022 (IGM Resins) |
| | Ethyl Phenyl(2,4-6-trimethylbenzoyl)phosphinat | |
| **P1-2** | Typ-1-Photoinitiator Mischung aus Ethyl Phenyl(2,4-6-trimethylbenzoyl)phosphinat; Bis(2,4,6-Trimethylbenzoyl) phenylphosphin oxid | Speedcure 2100 (Sartomer) |
| **P2** | Typ-2-Photoinitiator | Omnirad DETX (IGM Resins) |
| | 2,4-Diethylthioxanthon | |
| **E** | Mikrohohlkugeln, bei der eine thermoplastische Hülle einen gasförmigen oder flüssigen Kohlenwasserstoff einschliesst | Expancel 031 DU 40 (Nouryon) |
| **Synergist** | Acrylierter Amin Synergist | Miramer AS2010 (Miwon) |
| **Haftvermittler** | Säuremodifizierter Acrylat-Haftvermittler | Ebecryl 170 (Allnex) |

### Zusammensetzungen

Die Zusammensetzungen **Z2, Z3, Z4, Z5,** und **Z6** sind erfindungsgemäss. Mit "(Ref.)" bezeichnete Zusammensetzungen sind Vergleichsbeispiele. **Z1** (Ref.) enthält kein thermisch expandierbares Material **E.**

**Tabelle 2: Zusammensetzungen (in Gew.-%).**

| **Zusammensetzung** | **Z1** (Ref.) | **Z2** | **Z3** | **Z4** | **Z5** | **Z6** |
|---|---|---|---|---|---|---|
| **V1-1** | 45 | 37.5 | - | - | - | - |
| **V1-2** | 45 | 37.5 | - | - | - | - |
| **V2-1** | - | - | 88 | - | - | - |
| **V2-2** | - | - | - | - | 75 | - |
| **V3** | - | - | - | 88 | - | - |
| **V4** | - | - | - | - | - | 80.5 |
| **P1-1** | 1 | 1 | - | - | - | - |
| **P1-2** | - | - | 2 | 2 | 5.5 | 4.0 |
| **P2** | 4 | 4 | - | - | - | - |
| **E1** | - | 15 | 10 | 10 | 10 | 10 |
| **Synergist** | 5 | 5 | - | - | - | - |
| **Haftvermittler** | - | - | - | - | 9.5 | 5.5 |

### Materialprüfungen

Die Tabelle 3 zeigt, dass der Klebeverbund bei den erfindungsgemässen Ausführungsformen, Zusammensetzungen **Z2, Z3, Z4, Z5,** und **Z6** bei Normklima (NK) eine Zugscherfestigkeit von mehr als 4 MPa besitzen. Damit genügen sie den Anforderungen eines Klebeverbunds für den Einsatz, insbesondere im Automobilbereich.

Nach Erwärmen des Klebeverbunds auf 120°C respektive auf 130°C erfüllen die erfindungsgemässen Beispiele **Z2** bis **Z6** die Anforderungen an eine Debondingfestigkeit von unter 0.5 MPa. Die erfindungsgemässen Beispiele **Z2** bis **Z6** lassen sich also gemäss dem erfindungsgemässen Verfahren ablösen. Bei dem Vergleichsbeispiel **Z0** (Ref.), welches keine erfindungsgemässe härtbare Zusammensetzung enthält, und beim Vergleichsbeispiel **Z1** (Ref.), welches kein thermisch expandierbares Material **E** enthält, ist die Zugscherfestigkeit nach Erwärmen des Klebeverbunds auf 120°C respektive auf 130°C über 3 MPa, was den Erfordernissen einer «debonding on demand» Anwendung nicht genügt. Folglich kann man diesen Klebeverbund nicht nach dem erfindungsgemässen Verfahren ablösen.

**Tabelle 3: Materialprüfungen und Resultate.**

| **Resultate** | | **Z0** (Ref.) | **Z1** (Ref.) | **Z2** | **Z3** | **Z4** | **Z5** | **Z6** |
|---|---|---|---|---|---|---|---|---|
| Zugscherfestigkeit (MPa) | NK | 32.8 | 6.20 | 4.05 | 5.79 | 4.87 | 10.0 | 18.9 |
| | 120°C | 3.44 | 3.40 | 0.24 | 0.35 | 0.42 | 0.38 | 0.44 |
| | 130°C | 3.44. | 3.40 | 0.35 | 0.21 | 0.07 | 0.22 | 0.08 |

## Patentansprüche

1. Härtbare Zusammensetzung enthaltend
- mindestens eine Verbindung mit (Meth)acrylat Endgruppen **V;**
- mindestens ein Photoinitiator **P**;
- mindestens ein thermisch expandierbares Material **E;**
- optional Additive **AD.**

2. Härtbare Zusammensetzung gemäss Anspruch 1, **dadurch gekennzeichnet, dass** die härtbare Zusammensetzung durch UV-Vis Strahlung, insbesondere im Bereich von Wellenlängen von 315 bis 415 nm, härtbar ist.

3. Härtbare Zusammensetzung gemäss einem der Ansprüche 1 bis 2, **dadurch gekennzeichnet, dass** die Verbindung mit (Meth)acrylat Endgruppen **V** Monomere mit (Meth)acrylat Endgruppen umfasst, bevorzugt monofuktionelle, multifunktionelle, insbesondere difunktionelle und/oder trifunktionelle (Meth)acrylat Monomere, besonders bevorzugt eine Mischung von difunktionellen und trifunktionelle (Meth)acrylat Monomeren.

4. Härtbare Zusammensetzung gemäss einem der Ansprüche 1 bis 3, **dadurch gekennzeichnet, dass** die Verbindung mit (Meth)acrylat Endgruppen **V** ein Prepolymer mit Polyether- und/oder Polyester-und/oder β-Hydroxylether-Wiederholungseinheiten umfasst.

5. Härtbare Zusammensetzung gemäss einem der Ansprüche 1 bis 4, **dadurch gekennzeichnet, dass** die Verbindung mit (Meth)acrylat Endgruppen **V** Urethan-Gruppen aufweist.

6. Härtbare Zusammensetzung gemäss einem der Ansprüche 1 bis 5, **dadurch gekennzeichnet, dass** der Photoinitiator **P** mindestens ein Typ-1-und/oder ein Typ-2-Photoinitiator, bevorzugt eine Mischung von Typ-1-und Typ-2-Photoinitiatoren umfasst.

7. Härtbare Zusammensetzung gemäss einem der Ansprüche 1 bis 6, **dadurch gekennzeichnet, dass** das thermisch expandierbare Material **E** ein physikalisches und/oder chemisches Treibmittel umfasst.

8. Härtbare Zusammensetzung gemäss einem der Ansprüche 1 bis 7, **dadurch gekennzeichnet, dass** das thermisch expandierbare Material **E** aus Mikrohohlkugeln besteht.

9. Härtbare Zusammensetzung gemäss einem der Ansprüche 1 bis 8, **dadurch gekennzeichnet, dass** das thermisch expandierbare Material **E** aus Mikrohohlkugeln besteht, bei der eine thermoplastische Hülle eine gasförmige oder flüssige organische Verbindung einschliesst.

10. Härtbare Zusammensetzung gemäss einem der Ansprüche 1 bis 9, **dadurch gekennzeichnet, dass** das thermisch expandierbare Material **E** aus Mikrohohlkugeln besteht, wobei deren mittlere Teilchengrössenverteilung D₅₀ im nicht expandierten Zustand im Bereich von 10 bis 80 um, bevorzugt von 20 bis 60 um, gemessen nach ISO 13320, liegt.

11. Härtbare Zusammensetzung gemäss einem der Ansprüche 1 bis 10, **dadurch gekennzeichnet, dass** die härtbare Zusammensetzung zusätzlich Additive **AD,** ausgewählt aus ausgewählt aus Haftvermittler, Synergisten, Benetzungsadditive, Rheologie-Modifizierer, Füllstoffe, Weichmacher, Pigmente, Stabilisatoren, Carbonsäuren und Lösemittel enthält.

12. Härtbare Zusammensetzung gemäss einem der Ansprüche 1 bis 11, **dadurch gekennzeichnet, dass** die Zusammensetzung, jeweils bezogen auf die gesamte Zusammensetzung
- Zwischen 70 Gew.-% und 95 Gew.-% Verbindung mit (Meth)acrylat Endgruppen **V;**
- Zwischen 0.1 Gew.-% und 5 Gew.-% Photoinitiator **P**;
- Zwischen 5 Gew.-% und 25 Gew.-% thermisch expandierbares Material **E;**
- Zwischen 0 Gew.-% und 20 Gew.-% Additive **AD;**
sowie gegebenenfalls weitere Inhaltsstoffe enthält, wobei die Summe aller Inhaltsstoffe 100 Gew.-% beträgt.

13. Klebeverbund, umfassend
(a) ein Substrat **S**;
(b) eine ausgehärtete härtbare Zusammensetzung gemäss einem der Ansprüche 1 bis 12, welche auf dem Substrat **S** aus (a) aufgebracht ist;
(c) eine ausgehärtete Klebstoff-Zusammensetzung, welche auf der ausgehärteten härtbaren Zusammensetzung aus (b) aufgebracht ist.

14. Klebeverbund gemäss Anspruch 13, **dadurch gekennzeichnet, dass** die Klebstoff-Zusammensetzung bei Raumtemperatur unter Vernetzung aushärtet.

15. Klebeverbund gemäss einem der Ansprüche 13 bis 14, **dadurch gekennzeichnet, dass** die Klebstoff-Zusammensetzung ein Epoxidharz-basierter Klebstoff, ein Polyurethan-basierter Klebstoff, ein Poly(meth)acrylat-basierter Klebstoff, ein Klebstoff auf Basis Silan-terminierter Polymer (STP) und/oder ein Silikon-Klebstoff, bevorzugterweise ein Epoxidharz-basierter Klebstoff umfasst.

16. Klebeverbund gemäss einem der Ansprüche 13 bis 15, **dadurch gekennzeichnet, dass** das Substrat **S** Glas, Metalle, Kunststoffe und/oder weitere Materialen umfasst.

17. Verfahren zum Ablösen des Klebeverbunds gemäss einem der Ansprüche 13 bis 16, umfassend die folgenden Schritte:
i) Erwärmen des Klebeverbunds auf mindestens die Ausdehnungstemperatur des thermisch expandierbaren Materials **E** während mindestens 5 Sekunden, bevorzugt während mindestens 30 Sekunden, besonders bevorzugt während 1 Minute, wobei eine Ausdehnungstemperatur von mindestens 80°C, bevorzugt mindestens 100°C, besonders bevorzugt mindestens 120°C erreicht wird;
ii) Trennen der ausgehärteten Zusammensetzung vom Substrat **S,** direkt nach dem Schritt i) oder nach Abkühlen des Klebeverbunds auf Raumtemperatur, bevorzugt direkt nach dem Schritt i).
